(19) Europäisches Patentamt
European Patent Office
Office européen des brevets

(11) **EP 4 468 705 A1**

(12) **DEMANDE DE BREVET EUROPEEN**

(43) Date de publication:
**27.11.2024 Bulletin 2024/48**

(21) Numéro de dépôt: **24190990.2**

(22) Date de dépôt: **18.06.2019**

(51) Classification Internationale des Brevets (IPC):
**H04N 19/176** (2014.01)      **H04N 19/593** (2014.01)
**H04N 19/11** (2014.01)      **H04N 19/463** (2014.01)
**H04N 19/154** (2014.01)

(52) Classification Coopérative des Brevets (CPC):
**H04N 19/11; H04N 19/154; H04N 19/176;**
**H04N 19/463; H04N 19/593;** H04N 19/103;
H04N 19/147; H04N 19/19; H04N 19/61

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.06.2018 FR 1855792**

(62) Numéro(s) de document de la (des) demande(s) initiale(s) en application de l'article 76 CBE:
**19745690.8 / 3 815 369**

(71) Demandeur: **Orange**
**92130 Issy-les-Moulineaux (FR)**

(72) Inventeurs:
• **HENRY, Félix**
  **92326 CHÂTILLON (FR)**
• **ABDOLI, Mohsen**
  **92326 CHÂTILLON (FR)**

(74) Mandataire: **Vidon Brevets & Stratégie**
**16B, rue de Jouanet**
**35700 Rennes (FR)**

Remarques:
Cette demande a été déposée le 25.07.2024 comme demande divisionnaire de la demande mentionnée sous le code INID 62.

(54) **PROCÉDÉS ET DISPOSITIFS DE CODAGE ET DE DÉCODAGE D'UN FLUX DE DONNÉES REPRÉSENTATIF D'AU MOINS UNE IMAGE**

(57) L'invention concerne un procédé de codage et un procédé de décodage d'un flux de données codées représentatif d'au moins une image découpée en blocs. Pour au moins un bloc de l'image, dit bloc courant, il est déterminé (E42) si le bloc courant est codé selon un mode de codage intra ou un autre mode de codage, le mode de codage intra étant un mode de codage utilisant un mode de prédiction intra sélectionné dans un groupe de modes de prédiction intra, en fonction d'au moins un mode de prédiction intra associé à un bloc voisin du bloc courant, l'autre mode de codage étant un mode de codage dans lequel la prédiction du bloc courant est obtenue en codant le bloc pixel par pixel en fonction d'une fonction de prédiction locale utilisant des pixels précédemment reconstruits, voisins du pixel courant. Lorsque le bloc courant est codé selon ledit mode de codage intra, un mode de prédiction intra dans ledit groupe de modes de prédiction intra est déterminé (E431) pour le bloc courant, en fonction d'au moins un mode de prédiction intra associé à un bloc précédemment décodé de l'image, le bloc courant est décodé (E43) en fonction dudit mode de prédiction intra déterminé qui est associé (E437) audit bloc courant. Lorsque le bloc courant est codé selon ledit autre mode de codage, le bloc courant est décodé (E44) selon ledit autre mode de codage, un mode de prédiction intra dans ledit groupe de modes de prédiction intra est déterminé (E449) et associé (E450) audit bloc courant, et lors du décodage d'un bloc suivant le bloc courant, ledit mode de prédiction intra précédemment associé au bloc courant pour la prédiction d'un mode de prédiction intra du bloc suivant est utilisé si ledit bloc suivant est codé selon un mode de codage intra.

Fig. 4

EP 4 468 705 A1

**Description**

1. Domaine de l'invention

Le domaine de l'invention est celui du codage et du décodage d'images ou de séquences d'images, et notamment de flux vidéo.

Plus précisément, l'invention concerne la compression d'images ou de séquences d'images utilisant une représentation par blocs des images.

L'invention peut notamment s'appliquer au codage image ou vidéo mis en oeuvre dans les codeurs actuels ou à venir (JPEG, MPEG, H.264, HEVC, etc et leurs amendements), et au décodage correspondant.

2. Art Antérieur

Les images et séquences d'images numériques occupent beaucoup d'espace en termes de mémoire, ce qui nécessite, lorsque l'on transmet ces images, de les compresser afin d'éviter les problèmes d'encombrement sur le réseau utilisé pour cette transmission.

On connaît déjà de nombreuses techniques de compression de données vidéo. Parmi celles-ci, le standard de compression HEVC ("High Efficiency Video Coding, Coding Tools and Spécification", Matthias Wien, Signals and Communication Technology, 2015) propose de mettre en oeuvre une prédiction de pixels d'une image courante par rapport à d'autres pixels appartenant à la même image (prédiction intra) ou à une image précédente ou suivante (prédiction inter).

Plus précisément, la prédiction intra exploite les redondances spatiales au sein d'une image. Pour ce faire, les images sont découpées en blocs de pixels. Les blocs de pixels sont alors prédits à l'aide d'informations déjà reconstruites, correspondant aux blocs précédemment codés/décodés dans l'image courante selon l'ordre de parcours des blocs dans l'image.

Par ailleurs, de manière classique, le codage d'un bloc courant est réalisé à l'aide d'une prédiction du bloc courant, dit bloc prédicteur, et d'un résidu de prédiction ou « bloc résiduel », correspondant à une différence entre le bloc courant et le bloc prédicteur. Le bloc résiduel obtenu est alors transformé, par exemple en utilisant une transformée de type DCT (transformée en cosinus discrète). Les coefficients du bloc résiduel transformé sont ensuite quantifiés, puis codés par un codage entropique et transmis au décodeur, qui peut reconstruire le bloc courant en ajoutant ce bloc résiduel au bloc prédicteur.

Le décodage est fait image par image, et pour chaque image, bloc par bloc. Pour chaque bloc, les éléments correspondants du flux sont lus. La quantification inverse et la transformation inverse des coefficients du bloc résiduel sont effectuées. Puis, la prédiction du bloc est calculée pour obtenir le bloc prédicteur et le bloc courant est reconstruit en ajoutant la prédiction (i.e. le bloc prédicteur) au bloc résiduel décodé.

Dans le standard HEVC, il est possible d'effectuer une prédiction intra d'un bloc courant selon 35 modes de prédiction intra différents. Pour coder le mode de prédiction intra sélectionné pour coder un bloc courant, le standard HEVC définit deux listes de modes de prédiction:

- une première liste dite liste MPM (pour Most Probable Mode en anglais) comprenant les 3 modes de prédiction intra les plus probables pour le bloc courant, une telle liste MPM étant définie à partir des modes de prédiction préalablement sélectionnés lors du codage des blocs voisins du bloc courant,
- une deuxième liste dite liste non-MPM comprenant les 32 autres modes de prédiction intra restants, i.e les modes de prédiction intra non compris dans la liste MPM.

Selon le standard HEVC, la liste MPM est construite en fonction des modes de prédiction intra utilisés pour coder les blocs voisins du bloc courant situés respectivement à gauche et au-dessus du bloc courant. Toutefois, le mécanisme de construction de la liste MPM du standard HEVC ne nécessite pas qu'un mode de prédiction intra soit systématiquement disponible pour les blocs voisins. Lorsqu'au moins un des blocs voisins n'a pas été préalablement codé à l'aide d'un mode de prédiction intra, le mécanisme de construction de la liste MPM peuple la liste MPM à l'aide d'un ou plusieurs modes de prédiction intra par défaut.

Il apparaît que selon ce mécanisme de codage d'un mode de prédiction intra (utilisation d'une liste MPM), lorsque les blocs voisins ne sont pas codés selon un mode de prédiction intra, le coût de codage d'un mode de prédiction intra pour le bloc courant est élevé. De plus, lorsque de nouveaux modes de prédiction intra sont utilisés en complément des modes de prédiction intra classiques existants (par exemple ceux du standard HEVC, ou H.264, ou autres), l'utilisation d'un nouveau mode de prédiction intra ou d'un mode de prédiction inter pour le bloc courant impacte le coût de codage d'un mode de prédiction intra pour les blocs suivants de l'image qui sont codés en mode intra.

Il existe donc un besoin pour une nouvelle méthode de codage et de décodage pour améliorer la compression des données image ou vidéo.

3. Exposé de l'invention

L'invention vient améliorer l'état de la technique. Elle concerne à cet effet un procédé de décodage d'un flux de données codées représentatif d'au moins une image découpée en blocs. Le procédé de décodage comprend les étapes suivantes, pour au moins un bloc de l'image, dit bloc courant:

- détermination si le bloc courant est codé selon un mode de codage intra ou un autre mode de codage, le mode de codage intra étant un mode de codage utilisant un mode de prédiction intra sélectionné dans un groupe de modes de prédiction intra, en fonction d'au moins un mode de prédiction intra associé à un bloc voisin du bloc courant, l'autre mode de codage étant un mode de codage dans lequel la prédiction du bloc courant est obtenue en codant le bloc pixel par pixel en fonction d'une fonction de prédiction locale utilisant des pixels précédemment reconstruits, voisins du pixel courant,

- lorsque le bloc courant est codé selon ledit mode de codage intra:

  - détermination, pour le bloc courant, d'un mode de prédiction intra dans ledit groupe de modes de prédiction intra, en fonction d'au moins un mode de prédiction intra associé à un bloc précédemment décodé de l'image,
  - décodage dudit bloc courant en fonction dudit mode de prédiction intra déterminé,
  - association audit bloc courant dudit mode de prédiction intra déterminé,

- lorsque le bloc courant est codé selon ledit autre mode de codage:

  - décodage dudit bloc courant selon ledit autre mode de codage,
  - détermination, pour le bloc courant, d'un mode de prédiction intra, dans ledit groupe de modes de prédiction intra,
  - association audit bloc courant dudit mode de prédiction intra déterminé, et

  lors du décodage d'un bloc suivant le bloc courant :

  - utilisation dudit mode de prédiction intra précédemment associé au bloc courant pour la prédiction d'un mode de prédiction intra du bloc suivant si ledit bloc suivant est codé selon un mode de codage intra.

Selon l'invention, lorsqu'un bloc est codé selon un mode de codage différent d'un mode de codage intra dit classique, i.e. un mode de codage intra, tel que celui défini par exemple dans le standard HEVC, un mode de prédiction intra est déterminé et associé au bloc. Un tel mode de prédiction intra associé à un bloc courant est "fictif" puisqu'il ne sert pas, dans ce cas, au décodage du bloc courant. Un tel mode de prédiction intra associé au bloc courant peut être utilisé par la suite pour décoder un bloc suivant dans l'image si celui-ci est codé selon le mode de codage intra dit classique, ou bien pour associer un mode de prédiction intra au bloc suivant si le bloc suivant est codé selon un autre mode de codage.

Le mode de codage intra dit classique correspond à tout type de mode de codage intra utilisant un mode de prédiction intra sélectionné dans un groupe de modes de prédiction intra, en fonction d'un mode de prédiction intra qui a été utilisé pour prédire un bloc précédemment décodé et voisin du bloc courant. Par exemple, il peut s'agir d'un mode de codage intra selon le standard H.264/AVC, ou HEVC, ou autres.

L'autre mode de codage peut correspondre à tout type de mode de codage distinct du mode de codage intra dit classique, par exemple un mode de codage inter, un autre type de mode de codage intra (basé DPCM - pour Differential pulse-code modulation en anglais ou ILR - pour In-Loop Residual en anglais-, basé sur une technique de "template matching" (appariement de modèles en anglais, ...).

L'invention concerne également un procédé de codage d'un flux de données codées représentatif d'au moins une image découpée en blocs, le procédé de codage comprend les étapes suivantes, pour au moins un bloc de l'image, dit bloc courant:

- détermination si le bloc courant est codé selon un mode de codage intra ou un autre mode de codage, le mode de codage intra étant un mode de codage utilisant un mode de prédiction intra sélectionné dans un groupe de modes de prédiction intra en fonction d'au moins un mode de prédiction intra associé à un bloc voisin du bloc courant, l'autre mode de codage étant un mode de codage dans lequel la prédiction du bloc courant est obtenue en codant le bloc pixel par pixel en fonction d'une fonction de prédiction locale utilisant des pixels précédemment reconstruits, voisins du pixel courant,

- lorsque le bloc courant est codé selon ledit mode de codage intra:

  - détermination, pour le bloc courant, d'un mode de prédiction intra dans un groupe de modes de prédiction intra, en fonction d'au moins un mode de prédiction intra associé à un bloc précédemment décodé de l'image,
  - codage dudit bloc courant en fonction dudit mode de prédiction intra déterminé,
  - association audit bloc courant dudit mode de prédiction intra déterminé,

- lorsque le bloc courant est codé selon ledit autre mode de codage:

  - codage dudit bloc courant selon ledit autre mode de codage,
  - détermination, pour le bloc courant, d'un mode de prédiction intra dans ledit groupe de modes de prédiction intra,
  - association audit bloc courant dudit mode de prédiction intra déterminé, et

  lors du codage d'un bloc suivant le bloc courant :

  - utilisation dudit mode de prédiction intra précédemment associé au bloc courant pour la prédiction d'un mode de prédiction intra du bloc suivant si ledit bloc suivant est codé selon un mode de codage intra.

Selon un mode particulier de réalisation de l'invention, la détermination d'un mode de prédiction intra dans un groupe de modes de prédiction intra, en fonction d'au moins un mode de prédiction intra associé à un bloc précédemment décodé de l'image, comprend la construction d'une liste comprenant un sous-ensemble de modes de prédiction intra sélectionnés dans ledit groupe de modes de prédiction intra en fonction dudit au moins un mode de prédiction intra associé à un bloc précédemment décodé de l'image. Par exemple une telle liste peut correspondre à la liste des modes de prédiction les plus probables telle que définie selon le standard HEVC.

En outre, selon ce mode particulier de réalisation de l'invention, lorsque le bloc courant est codé selon ledit autre mode de codage, la détermination d'un mode de prédiction intra dans ledit groupe de modes de prédiction intra comprend la construction d'au moins une partie de ladite liste pour le bloc courant, et le mode de prédiction intra déterminé correspond au premier mode de prédiction intra de l'au moins une partie de la liste.

Selon ce mode particulier de réalisation de l'invention, une liste comprenant un sous-ensemble de modes de prédiction intra est créée, par exemple pour prédire un mode de prédiction intra utilisé pour prédire le bloc courant lorsque celui-ci est codé selon le mode de codage intra, par exemple de manière similaire au mécanisme de construction de la liste MPM du standard HEVC. Lorsque le bloc courant est codé selon un autre mode de codage, un mécanisme de construction de liste similaire est mis en oeuvre, selon lequel au moins une partie de la liste est créée, de sorte à sélectionner le premier mode de prédiction intra de cette liste pour l'associer au bloc courant.

Selon un autre mode particulier de réalisation de l'invention, lorsque le bloc courant est codé selon ledit autre mode de codage, le mode de prédiction intra déterminé correspond à un mode de prédiction prédéterminé.

Selon ce mode particulier de réalisation de l'invention, l'association d'un mode de prédiction intra non utilisé pour coder/décoder le bloc courant est rapide, puisqu'il s'agit d'un mode de prédiction prédéterminé, par exemple il peut s'agir du mode de prédiction intra PLANAR du standard HEVC. Il peut aussi s'agir d'un mode de prédiction intra par défaut et transmis dans le flux, au niveau image ou séquence d'images.

Selon un autre mode particulier de réalisation de l'invention, lorsque le bloc courant est codé selon ledit autre mode de codage, le mode de prédiction intra déterminé pour le bloc courant correspond à un mode de prédiction intra sélectionné dans au moins un sous-ensemble du groupe de modes de prédiction intra comme fournissant un bloc prédit pour le bloc courant pour lequel une distorsion calculée entre ledit bloc prédit et le bloc courant décodé est minimale.

Selon ce mode particulier de réalisation de l'invention, il est procédé à une sélection du mode de prédiction intra approximant au mieux le bloc courant décodé, parmi les modes de prédiction intra possibles, ou parmi certains seulement de ces modes de prédiction intra. Par exemple, tous les modes de prédiction intra peuvent être testés ou bien seulement ceux compris dans la liste des modes de prédiction intra les plus probables.

Selon un autre mode particulier de réalisation de l'invention, lorsque le bloc courant est codé selon ledit autre mode de codage, le décodage dudit bloc courant comprenant une prédiction dudit bloc courant fournissant un premier bloc courant prédit, le mode de prédiction intra déterminé pour le bloc courant correspond à un mode de prédiction intra sélectionné dans au moins un sous-ensemble du groupe de modes de prédiction intra comme fournissant un deuxième bloc prédit pour le bloc courant pour lequel une distorsion calculée entre ledit deuxième bloc prédit et ledit premier bloc courant prédit est minimale.

Selon ce mode particulier de réalisation de l'invention, le mode de prédiction intra qui est sélectionné est celui approximant au mieux le bloc courant prédit obtenu lors du décodage du bloc courant.

Selon un autre mode particulier de réalisation de l'invention, la prédiction dudit bloc courant fournissant un premier bloc courant prédit comprend, pour chaque pixel du bloc courant, l'obtention d'une prédiction dudit pixel à partir d'un autre pixel précédemment décodé, ledit autre pixel précédemment décodé appartenant audit bloc courant ou à un bloc précédemment décodé de l'image, et

- lorsque ledit autre pixel précédemment décodé appartient audit bloc courant, ledit autre pixel précédemment décodé est obtenu par:

  - le décodage d'un résidu de prédiction associé audit autre pixel,
  - la reconstruction dudit autre pixel par ajout d'une prédiction dudit autre pixel au résidu décodé.

Selon cette variante de réalisation de l'invention, la prédiction du bloc courant est obtenue en codant/décodant le bloc pixel par pixel, par exemple selon une technique DPCM ou ILR.

Selon un autre mode particulier de réalisation de l'invention, lorsque le bloc courant est codé selon ledit autre mode de codage, le décodage dudit bloc courant comprenant:

- la détermination d'une fonction de prédiction locale pour le bloc courant dans un groupe de fonctions de prédiction locale prédéterminées,
- la prédiction dudit bloc courant comprenant, pour chaque pixel du bloc courant:

- l'obtention d'une prédiction dudit pixel selon ladite fonction de prédiction locale utilisant au moins un pixel précédemment décodé voisin dudit pixel, ledit pixel précédemment décodé appartenant audit bloc courant ou à un bloc précédemment décodé de l'image,

- le mode de prédiction intra déterminé pour le bloc courant correspond à un mode de prédiction intra sélectionné dans le groupe de modes de prédiction intra en fonction de la fonction de prédiction locale.

Selon ce mode particulier de réalisation de l'invention, la prédiction du bloc courant est obtenue en codant/décodant le bloc courant pixel par pixel en fonction d'une fonction de prédiction locale utilisant des pixels précédemment décodés, voisins du pixel courant. Le mode de prédiction intra est alors sélectionné en fonction de la fonction de prédiction locale.

Selon un autre mode particulier de réalisation de l'invention, le mode de prédiction intra pour le bloc courant est déterminé à partir d'une table de correspondance associant un mode de prédiction intra à une fonction de prédiction locale du groupe de fonctions de prédiction locale prédéterminées.

Selon un autre mode particulier de réalisation de l'invention, pour un bloc voisin du bloc courant, situé après le bloc courant selon un ordre de parcours des blocs de l'image pour le codage ou le décodage, le bloc voisin étant codé selon ledit mode de codage intra, le procédé comprend:

- la détermination, pour le bloc voisin, d'un mode de prédiction intra dans un groupe de modes de prédiction intra, en fonction d'au moins le mode de prédiction intra associé au bloc courant,
- décodage ou codage dudit bloc voisin en fonction dudit mode de prédiction intra déterminé,
- association audit bloc voisin dudit mode de prédiction intra déterminé.

Selon un autre mode particulier de réalisation de l'invention, pour un bloc voisin du bloc courant, situé après le bloc courant selon un ordre de parcours des blocs de l'image pour le codage ou le décodage, le bloc voisin étant codé selon ledit autre mode de codage, le procédé comprend:

- le décodage ou le codage dudit bloc voisin selon ledit autre mode de codage,
- la détermination, pour le bloc voisin, d'un mode de prédiction intra dans ledit groupe de modes de prédiction intra, en fonction du mode de prédiction intra associé au bloc courant,
- association audit bloc voisin dudit mode de prédiction intra déterminé.

L'invention concerne également un dispositif de décodage configuré pour mettre en oeuvre le procédé de décodage selon l'un quelconque des modes particuliers de réalisation définis ci-dessus. Ce dispositif de décodage pourra bien sûr comporter les différentes caractéristiques relatives au procédé de décodage selon l'invention. Ainsi, les caractéristiques et avantages de ce dispositif de décodage sont les mêmes que ceux du procédé de décodage, et ne sont pas détaillés plus amplement.

Le dispositif de décodage comprend notamment un processeur configuré pour, pour au moins un bloc de l'image, dit bloc courant:

- déterminer si le bloc courant est codé selon un mode de codage intra ou un autre mode de codage, le mode de codage intra étant un mode de codage utilisant un mode de prédiction intra sélectionné dans un groupe de modes de prédiction intra en fonction d'au moins un mode de prédiction intra associé à un bloc voisin du bloc courant, l'autre mode de codage étant un mode de codage dans lequel la prédiction du bloc courant est obtenue en codant le bloc pixel par pixel en fonction d'une fonction de prédiction locale utilisant des pixels précédemment reconstruits, voisins du pixel courant,
- lorsque le bloc courant est codé selon ledit mode de codage intra:

  - déterminer, pour le bloc courant, un mode de prédiction intra dans un groupe de modes de prédiction intra, en fonction d'au moins un mode de prédiction intra associé à un bloc précédemment décodé de l'image,
  - décoder ledit bloc courant en fonction dudit mode de prédiction intra déterminé,
  - associer audit bloc courant ledit mode de prédiction intra déterminé,

- lorsque le bloc courant est codé selon ledit autre mode de codage:

  - décoder ledit bloc courant selon ledit autre mode de codage,
  - déterminer, pour le bloc courant, un mode de prédiction intra dans ledit groupe de modes de prédiction intra,

- associer audit bloc courant ledit mode de prédiction intra déterminé, et lors du décodage d'un bloc suivant le bloc courant :

  - utiliser ledit mode de prédiction intra précédemment associé au bloc courant pour prédire un mode de prédiction intra du bloc suivant si ledit bloc suivant est codé selon un mode de codage intra.

Selon un mode particulier de réalisation de l'invention, un tel dispositif de décodage est compris dans un terminal.

L'invention concerne également un dispositif de codage configuré pour mettre en oeuvre le procédé de codage selon l'un quelconque des modes particuliers de réalisation définis ci-dessus. Ce dispositif de codage pourra bien sûr comporter les différentes caractéristiques relatives au procédé de codage selon l'invention. Ainsi, les caractéristiques et avantages de ce dispositif de codage sont les mêmes que ceux du procédé de codage, et ne sont pas détaillés plus amplement.

Le dispositif de codage comprend notamment un processeur configuré pour, pour au moins un bloc de l'image, dit bloc courant:

- déterminer si le bloc courant est codé selon un mode de codage intra ou un autre mode de codage, le mode de codage intra étant un mode de codage utilisant un mode de prédiction intra sélectionné dans un groupe de modes de prédiction intra en fonction d'au moins un mode de prédiction intra associé à un bloc voisin du bloc courant, l'autre mode de codage étant un mode de codage dans lequel la prédiction du bloc courant est obtenue en codant le bloc pixel par pixel en fonction d'une fonction de prédiction locale utilisant des pixels précédemment reconstruits, voisins du pixel courant,

- lorsque le bloc courant est codé selon ledit mode de codage intra:

  - déterminer, pour le bloc courant, un mode de prédiction intra dans un groupe de modes de prédiction intra, en fonction d'au moins un mode de prédiction intra associé à un bloc précédemment décodé de l'image,
  - coder ledit bloc courant en fonction dudit mode de prédiction intra déterminé,
  - associer audit bloc courant ledit mode de prédiction intra déterminé,

- lorsque le bloc courant est codé selon ledit autre mode de codage:

  - coder ledit bloc courant selon ledit autre mode de codage,
  - déterminer, pour le bloc courant, un mode de prédiction intra dans ledit groupe de modes de prédiction intra,
  - associer audit bloc courant ledit mode de prédiction intra déterminé, et

  lors du codage d'un bloc suivant le bloc courant :

  - utiliser ledit mode de prédiction intra précédemment associé au bloc courant pour prédire un mode de prédiction intra du bloc suivant si ledit bloc suivant est codé selon un mode de codage intra.

Selon un mode particulier de réalisation de l'invention, un tel dispositif de codage est compris dans un terminal, ou un serveur.

Le procédé de décodage, respectivement le procédé de codage, selon l'invention peut être mis en oeuvre de diverses manières, notamment sous forme câblée ou sous forme logicielle. Selon un mode particulier de réalisation de l'invention, le procédé de décodage, respectivement le procédé de codage, est mis en oeuvre par un programme d'ordinateur. L'invention concerne également un programme d'ordinateur comportant des instructions pour la mise en oeuvre du procédé de décodage ou du procédé de codage selon l'un quelconque des modes particuliers de réalisation décrits précédemment, lorsque ledit programme est exécuté par un processeur. Un tel programme peut utiliser n'importe quel langage de programmation. Il peut être téléchargé depuis un réseau de communication et/ou enregistré sur un support lisible par ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable. L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage tel qu'une mémoire. D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, les supports d'enregistrement peuvent correspondre à un circuit intégré dans lequel le programme est incorporé, le circuit étant adapté pour exécuter ou pour être utilisé dans l'exécution du procédé en question.

4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 présente des étapes du procédé de codage selon un mode particulier de réalisation de l'invention,
- la figure 2 illustre un exemple de position des blocs voisins d'un bloc courant pour déterminer un mode de prédiction intra selon un mode particulier de réalisation de l'invention,

- la figure 3 illustre un exemple de position des pixels de référence utilisés pour prédire des pixels d'un bloc courant selon un mode particulier de réalisation de l'invention,

- la figure 4 présente des étapes du procédé de décodage selon un mode particulier de réalisation de l'invention,

- la figure 5 illustre un exemple de signal comportant des données codées représentatives d'au moins un bloc d'une image selon un mode particulier de réalisation de l'invention,

- la figure 6 présente la structure simplifiée d'un dispositif de codage adapté pour mettre en oeuvre le procédé de codage selon l'un quelconque des modes particuliers de réalisation de l'invention,

- la figure 7 présente la structure simplifiée d'un dispositif de décodage adapté pour mettre en oeuvre le procédé de décodage selon l'un quelconque des modes particuliers de réalisation de l'invention.

5. Description d'un mode de réalisation de l'invention

5.1 Principe général

Le principe général de l'invention est d'associer un mode de prédiction intra déterminé dans un groupe de modes de prédiction intra définis pour un mode de codage intra, à un bloc d'une image codé selon un autre mode de codage distinct du mode de codage intra.

Classiquement, lorsqu'un bloc de l'image est codé selon le mode de codage intra, le mode de prédiction utilisé pour coder ce bloc est codé dans le flux. Un tel mode de prédiction défini pour un mode de codage intra est prédit à partir des modes de prédiction intra utilisés pour coder des blocs voisins du bloc. Selon l'invention, lorsqu'un bloc voisin n'a pas été codé selon le mode de codage intra, et donc qu'aucun mode de prédiction intra défini pour le mode de codage intra n'a été utilisé pour coder ce bloc voisin, le bloc voisin dispose tout de même d'un mode de prédiction intra associé à ce bloc voisin. Le mode de prédiction intra associé au bloc voisin peut ainsi être utilisé pour prédire le mode de prédiction intra d'un bloc codé selon un mode de codage intra, ou bien pour déterminer un mode de prédiction intra à associer à ce bloc, lorsque ce bloc est codé selon un autre mode de codage.

L'invention permet ainsi d'améliorer les performances en compression.

5. 2 Exemples de mise en oeuvre

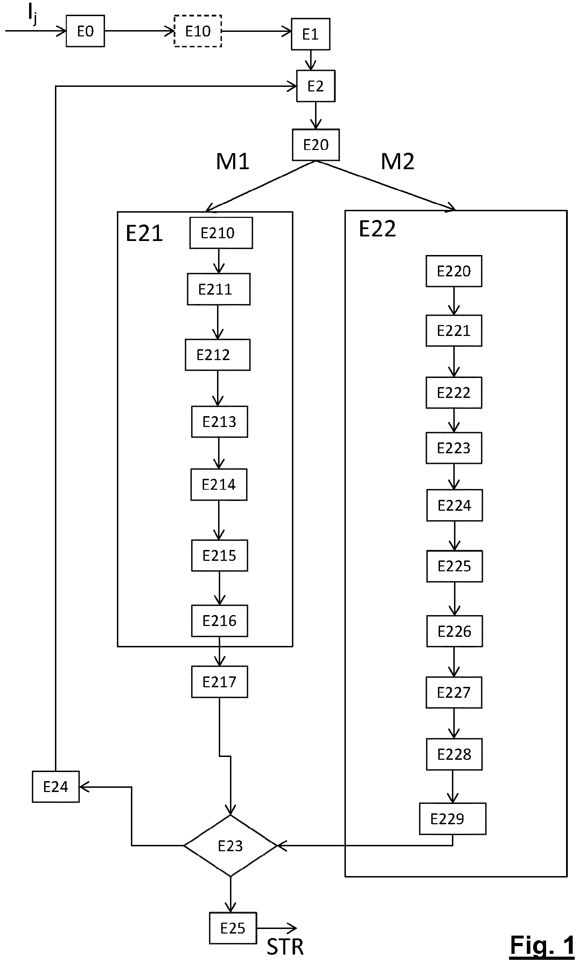

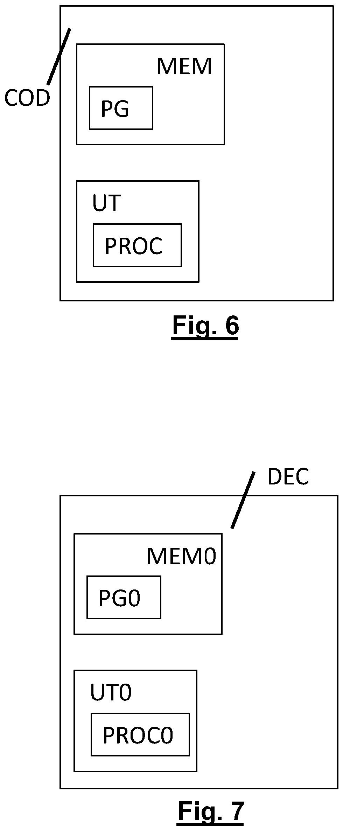

La figure 1 présente des étapes du procédé de codage selon un mode particulier de réalisation de l'invention. Par exemple, on code une séquence d'images $I_1$, $I_2$, ..., $I_{Nb}$ sous la forme d'un flux de données codées STR selon un mode particulier de réalisation de l'invention. Par exemple, un tel procédé de codage est mis en oeuvre par un dispositif de codage tel que décrit plus loin en relation avec la figure 6.

Une séquence d'images $I_1$, $I_2$, ..., ..., $I_{Nb}$, Nb étant le nombre d'images de la séquence à coder, est fournie en entrée du procédé de codage. Le procédé de codage délivre en sortie un flux de données codées STR représentatif de la séquence d'images fournie en entrée.

De manière connue, le codage de la séquence d'images $I_1$, $I_2$, ..., ..., $I_{Nb}$ est fait image par image selon un ordre de codage préalablement établi et connu du décodeur. Par exemple, les images peuvent être codées dans l'ordre temporel $I_1$, $I_2$, ..., ..., $I_{Nb}$ ou selon un autre ordre, par exemple $I_1$, $I_3$, $I_2$, ..., ..., $I_{Nb}$.

Lors d'une étape E0, une image $I_j$ à coder de la séquence d'images $I_1$, $I_2$, ..., $I_{Nb}$ est découpée en blocs, par exemple en blocs de taille 32x32, ou 64x64 pixels ou plus. Un tel bloc peut être subdivisé en sous-blocs carrés ou rectangulaires, par exemple de taille 16x16, 8x8, 4x4, 16x8, 8x16, ....

Lors d'une étape optionnelle E10, selon un mode particulier de réalisation de l'invention, un paramètre de quantification QP est codé dans le flux de données STR, au niveau des données codées pour l'image I; ou bien au niveau des données codées pour la séquence d'images.

Puis, lors d'une étape E1, un premier bloc ou sous-bloc $X_b$ à coder de l'image $I_j$ est sélectionné selon un sens de parcours de l'image $I_j$ prédéterminé. Par exemple, il peut s'agir du premier bloc dans l'ordre lexicographique de parcours de l'image.

Lors d'une étape E2, l'encodeur choisit le mode de codage pour coder le bloc courant $X_b$. Selon le mode particulier de réalisation décrit ici, l'encodeur sélectionne le mode de codage pour coder le bloc courant $X_b$ parmi un premier mode de codage M1 et un deuxième mode de codage M2. Des modes de codage supplémentaires (non décrits ici) peuvent être utilisés.

Selon le mode particulier de réalisation décrit ici, le premier mode de codage M1 correspond au codage du bloc courant par prédiction intra classique, par exemple tel que défini selon le standard HEVC et le deuxième mode de codage M2 correspond au codage par prédiction In Loop Residual (ILR).

Le principe de l'invention peut être étendu à d'autres types de modes de codage, que ce soit pour le premier mode de codage M1 ou le deuxième mode de codage M2. Par exemple, le premier mode de codage peut correspondre à tout type de modes de codage intra selon lequel le mode de prédiction intra utilisé pour coder un bloc est codé par prédiction à partir du mode de prédiction intra des blocs voisins précédemment décodés lorsqu'il existe. C'est par exemple le cas du mode de codage intra selon les standards H.264 ou HEVC ou encore dans le logiciel expérimental JEM disponible à l'adresse internet (https://ivet.hhi.fraunhofer.de/).

Le deuxième mode de codage peut correspondre à tout type de modes de codage disponibles au codeur/décodeur, par exemple un mode de codage inter-images, un mode de codage par template matching, .....

Lors de l'étape E2, le codeur peut réaliser une optimisation débit/distorsion pour déterminer le meilleur mode de codage pour coder le bloc courant. Au cours de cette optimisation débit/distorsion, des modes de codage supplémentaires distincts du premier et du deuxième modes de codage peuvent être testés, par exemple un mode de codage en mode inter. Au cours de cette optimisation débit/distorsion, le codeur simule le codage du bloc courant $X_b$ selon les différents modes de codage disponibles afin de déterminer le débit et la distorsion associés à chaque mode de codage et, sélectionne le mode de codage offrant le meilleur compromis débit/distorsion, par exemple selon la fonction D+AR, où R représente le débit nécessaire pour coder le bloc courant selon le mode de codage évalué et D la distorsion mesurée entre le bloc décodé et le bloc courant original et $\lambda$ un multiplicateur lagrangien, par exemple entré par l'utilisateur ou défini au codeur.

Lors d'une étape E20, une information indiquant le mode de codage sélectionné pour le bloc courant est codée dans le flux de données STR.

Si le bloc courant $X_b$ est codé selon le premier mode de codage M1, le procédé passe à l'étape E21 de codage du bloc selon M1. Si le bloc courant $X_b$ est codé selon le deuxième mode de codage M2, le procédé passe à l'étape E22 de codage du bloc selon M2.

On décrit ci-après l'étape E21 de codage du bloc selon le premier mode de codage M1, selon un mode particulier de réalisation de l'invention. Selon le mode particulier décrit ici, le premier mode de codage correspond à une prédiction intra classique, telle que celle définie dans le standard HEVC.

Selon un mode particulier de réalisation de l'invention, lors d'une étape E210, un pas de quantification $\delta_1$ est déterminé. Par exemple, le pas de quantification $\delta_1$ peut être fixé par l'utilisateur, ou bien calculé à l'aide d'un paramètre de quantification fixant un compromis entre compression et qualité et entré par l'utilisateur ou défini par le codeur. Ainsi, un tel paramètre de quantification peut être le paramètre $\lambda$, utilisé dans la fonction de coût débit-distorsion D+ $\lambda$.R où D représente la distorsion introduite par le codage et R le débit utilisé pour coder. Cette fonction sert à faire des choix de codage. Classiquement on cherche la façon de coder l'image qui minimise cette fonction.

En variante, le paramètre de quantification peut être le QP, correspondant au paramètre de quantification utilisé classiquement dans les normes AVC ou HEVC. Ainsi, dans la norme HEVC, le pas de quantification $\delta_1$ est déterminé par l'équation $\delta_1$=levelScale[ QP%6 ] << (QP/6)) où levelScale[ k ] = { 40, 45, 51, 57, 64, 72 } pour k = 0..5.

Lors d'une étape E211, une prédiction du bloc courant est déterminée à l'aide d'un mode de prédiction intra classique. Selon cette prédiction intra classique, chaque pixel prédit est calculé uniquement à partir des pixels décodés issus des blocs voisins (pixels de référence) situés au-dessus du bloc courant, et à gauche du bloc courant. La façon dont les pixels sont prédits à partir des pixels de référence dépend d'un mode de prédiction qui est transmis au décodeur, et qui est choisi par le codeur dans un ensemble prédéterminé de modes connus du codeur et du décodeur.

Ainsi, dans HEVC, il y a 35 modes de prédiction possibles : 33 modes qui interpolent les pixels de référence dans 33 directions angulaires différentes, et 2 autres modes: le mode DC dans lequel chaque pixel du bloc prédit est produit à partir de la moyenne des pixels de référence, et le mode PLANAR, qui effectue une interpolation plane et non directionnelle. Cette approche dite « prédiction intra classique » est bien connue et également utilisée dans le standard ITU-T H.264 (où il n'y a que 9 modes différents) ainsi que dans le logiciel expérimental JEM disponible à l'adresse internet (https://jvet.hhi.fraunhofer.de/), où il y a 67 modes de prédiction différents. Dans tous les cas, la prédiction intra classique respecte les deux aspects cités ci-dessus (prédiction des pixels à partir des blocs voisins et transmission au décodeur d'un mode de prédiction).

Au cours de l'étape E211, le codeur choisit donc un des modes de prédiction disponibles dans la liste prédéterminée de modes de prédiction. Une façon de choisir consiste par exemple à évaluer tous les modes de prédiction et à conserver le mode de prédiction qui minimise une fonction de coût tel que, classiquement, le coût débit-distorsion.

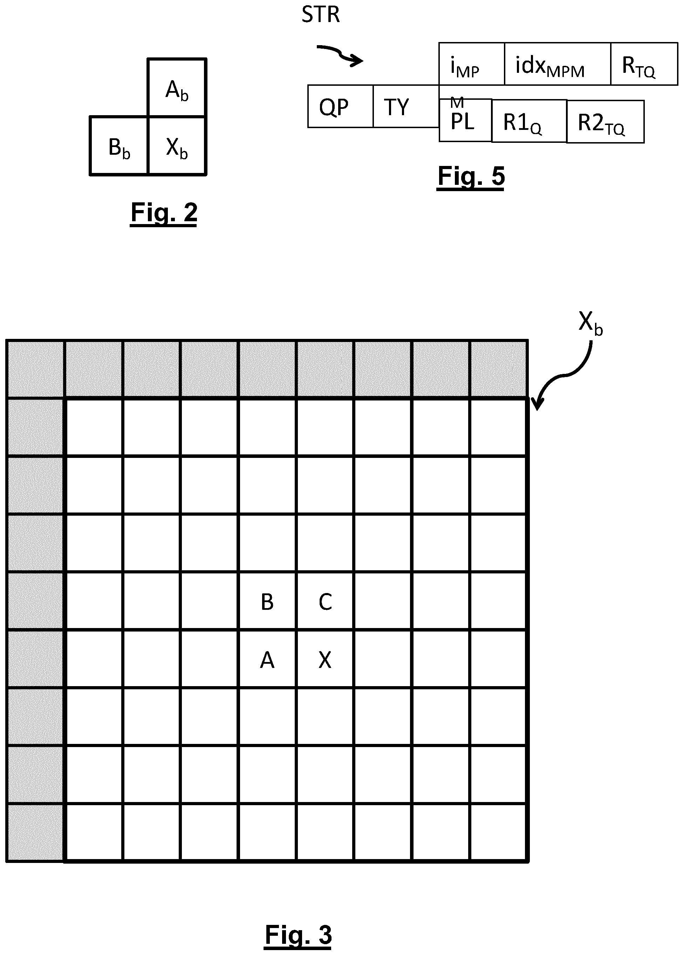

Lors d'une étape E212, le mode de prédiction choisi pour le bloc courant est codé à partir des blocs voisins du bloc courant. La figure 2 illustre un exemple de position des blocs voisins $A_b$ et $B_b$ du bloc courant $X_b$ pour coder le mode de prédiction du bloc courant $X_b$.

Au cours de l'étape E212, le mode de prédiction intra choisi pour le bloc courant est codé en utilisant les modes de prédiction intra associés aux blocs voisins.

Selon le mode particulier de réalisation de l'invention décrit ici, le mode de prédiction intra associé à un bloc est :

- le mode de prédiction intra qui a été utilisé pour prédire le bloc, si le bloc a été codé par un mode de codage par prédiction intra classique,
- le mode de prédiction intra qui a été associé au bloc, si le bloc a été codé par un autre mode de codage distinct du mode de codage par prédiction intra classique. Un exemple d'une telle association est décrit plus loin en référence à l'étape E229.

Ainsi, l'approche décrite dans la norme HEVC pour coder le mode de prédiction du bloc courant peut être utilisée. Une telle approche consiste, dans l'exemple de la figure 2, à identifier le mode de prédiction intra $m_A$ associé au bloc $A_b$ situé au-dessus du bloc courant, et le mode de prédiction intra $m_B$ associé au bloc $B_b$ situé juste à gauche du bloc courant. En fonction de la valeur de $m_A$ et de $m_B$, une liste dite MPM (pour Most Probable Mode), contenant 3 modes de prédiction intra, et une liste dite non-MPM, contenant les 32 autres modes de prédiction, sont créées.

Selon le mode particulier décrit ici, le mécanisme de création de la liste MPM spécifié selon la norme HEVC est adapté afin de prendre en compte l'association d'un mode de prédiction intra à un bloc lors de son codage, lorsque ce bloc n'est pas codé selon le mode de codage intra classique (étape E229 décrite plus loin). Ainsi, un bloc voisin du bloc courant a toujours un mode de prédiction intra qui lui est associé, que ce bloc ait été codé selon un mode de codage intra ou selon un autre mode de codage (ILR, inter, etc....).

Le reste du mécanisme de création de la liste MPM reste similaire à celui spécifié selon la norme HEVC. Si $m_A$ et $m_B$ sont tous deux égaux à un même mode de prédiction intra et que ce mode de prédiction intra est le mode de prédiction DC ou PLANAR, la liste MPM comprend les modes de prédiction suivants: MPM[0]=PLANAR, MPM[1]=DC, MPM[2]=A(26) correspondant au mode de prédiction angulaire à l'index 26 de la table des modes de prédiction intra HEVC.

Si $m_A$ et $m_B$ sont tous deux égaux à un même mode de prédiction angulaire m(n), la liste MPM comprend les modes de prédiction suivants: MPM[0]=m(n), MPM[1]=m(2+(n+29)mod32), MPM[2]=m(2+(n-1)mod32).

Si $m_A$ et $m_B$ sont différents, la liste MPM comprend les modes de prédiction suivants:
MPM[0]= $m_B$, MPM[1]= $m_A$, MPM[2]=Mlast, où Mlast est défini par:

- si $m_B$ n'est pas égal au mode PLANAR et $m_A$ n'est pas égal au mode PLANAR, alors Mlast est égal au mode PLANAR,
- si non, si $m_B$ n'est pas égal au mode DC et $m_A$ n'est pas égal au mode DC, alors Mlast est égal au mode DC,
- sinon Mlast est égal au mode angulaire A(26).

La liste non-MPM comprend tous les autres modes de prédiction intra non compris dans la liste MPM.

Selon la norme HEVC, afin de coder le mode de prédiction intra du bloc courant, des éléments de syntaxe sont transmis :

- un indicateur binaire indiquant si le mode de prédiction à coder pour le bloc courant est dans la liste MPM ou non,
- si le mode de prédiction du bloc courant appartient à la liste MPM, un index dans la liste MPM correspondant au mode de prédiction du bloc courant est codé,
- si le mode de prédiction du bloc courant n'appartient pas à la liste MPM, un index dans la liste non-MPM correspondant au mode de prédiction du bloc courant est codé.

Lors d'une étape E213, le résidu de prédiction R pour le bloc courant est construit.

Au cours de l'étape E213, de manière classique, un bloc prédit P est construit en fonction du mode de prédiction choisi à l'étape E211. Puis le résidu de prédiction R est obtenu en calculant la différence pour chaque pixel, entre le bloc prédit P et le bloc courant original.

Lors d'une étape E214, le résidu de prédiction R est transformé en $R_T$.

Au cours de l'étape E214, une transformée fréquentielle est appliquée au bloc de résidu R de façon à produire le bloc $R_T$ comprenant des coefficients transformés. La transformée pourra être une transformée de type DCT par exemple. Il est possible de choisir la transformée à utiliser dans un ensemble prédéterminé de transformées $E_T$ et de signaler la transformée utilisée au décodeur.

Lors d'une étape E215, le bloc de résidu transformé $R_T$ est quantifié à l'aide par exemple d'une quantification scalaire de pas de quantification $\delta_1$. Ceci produit le bloc de résidu de prédiction transformé quantifié $R_{TQ}$.

Lors d'une étape E216, les coefficients du bloc quantifié $R_{TQ}$ sont codés par un codeur entropique. On peut par exemple utiliser le codage entropique spécifié dans la norme HEVC. Selon la variante de réalisation décrite ici, lors d'une étape E217, le mode de prédiction déterminé à l'étape E211 est associé au bloc courant.

De manière connue, le bloc courant est décodé en dé-quantifiant les coefficients du bloc quantifié $R_{TQ}$, puis en appliquant la transformée inverse aux coefficients dé-quantifiés pour obtenir le résidu de prédiction décodé. La prédiction est ensuite ajoutée au résidu de prédiction décodé afin de reconstruire le bloc courant et d'obtenir sa version décodée. La version décodée du bloc courant peut ensuite être utilisée ultérieurement pour prédire spatialement d'autres blocs voisins de l'image ou bien pour prédire des blocs d'autres images par prédiction inter-images.

On décrit ci-après l'étape E22 de codage du bloc selon le deuxième mode de codage M2, selon un mode particulier de réalisation de l'invention. Selon le mode particulier décrit ici, le deuxième mode de codage correspond à un codage par prédiction ILR.

Au cours d'une étape E220, un prédicteur local PL pour le bloc courant est déterminé. Selon le mode de codage décrit ici, les pixels du bloc courant sont prédits par des pixels précédemment reconstruits d'un bloc voisin du bloc courant ou du bloc courant lui-même.

De préférence, pour prédire, on choisit des pixels qui sont les plus proches possibles du pixel à prédire. Pour cette raison, on parle de prédicteur local. Le prédicteur local PL peut également être assimilé à un mode de prédiction du bloc courant associé au deuxième mode de codage M2. Selon cette interprétation, dans le mode particulier de réalisation décrit ici, le premier mode de codage utilise un premier groupe de modes de prédiction intra, par exemple les modes de prédiction intra définis par le standard HEVC, et le deuxième mode de codage, ici le mode ILR, utilise un deuxième groupe de modes de prédiction distinct du premier groupe de modes de prédiction intra. Selon une variante de réalisation décrite plus loin, une correspondance entre ces deux groupes de modes de prédiction peut être déterminée.

Le prédicteur local PL peut être unique ou il peut être sélectionné dans un ensemble de prédicteurs locaux prédéterminés (deuxième groupe de modes de prédiction).

Selon une variante de réalisation, 4 prédicteurs locaux sont définis. Ainsi, si on appelle X un pixel courant à prédire du bloc courant, A le pixel situé immédiatement à gauche de X, B le pixel situé immédiatement à gauche et au-dessus de X, C le pixel situé immédiatement au-dessus de X, tel qu'illustré en figure 3 montrant un bloc courant $X_b$. 4 prédicteurs locaux PL1, PL2, PL3, PL4 peuvent être définis comme suit :

$$PL1(X) = \begin{cases} min(A,B) \text{ si } C \geq max(A,B) \\ max(A,B) \text{ si } C \leq min(A,B) \\ A+B-C \text{ sinon} \end{cases}$$

$$PL2(X) = A$$

$$PL3(X) = B$$

$$PL4(X) = C$$

où min(A,B) correspond à la fonction retournant la valeur la plus petite entre la valeur de A et la valeur de B et max(A,B) correspond à la fonction retournant la valeur la plus grande entre la valeur de A et la valeur de B.

Au cours de l'étape E220, on détermine quel prédicteur local PL utiliser pour le bloc courant. Autrement dit, le même prédicteur local sera utilisé pour tous les pixels du bloc courant, i.e. la même fonction de prédiction. Pour cela, plusieurs variantes de réalisation sont possibles.

Le codage du bloc courant avec chacun des prédicteurs peut être simulé (de manière similaire à une optimisation pour choisir un mode de codage pour le bloc courant), et le prédicteur local qui optimise une fonction de coût (par exemple, qui minimise la fonction D + $\lambda$.R où R est le débit utilisé pour coder le bloc, D est la distorsion du bloc décodé par rapport au bloc original, et $\lambda$ est un paramètre fixé par l'utilisateur) est sélectionné.

Ou bien, afin de limiter la complexité de la sélection d'un prédicteur local pour le bloc courant, une orientation de la texture des pixels précédemment codés est analysée. Par exemple, les pixels précédemment codés dans le bloc qui sont situés au-dessus ou à gauche du bloc courant sont analysés à l'aide d'un opérateur de type Sobel. S'il est déterminé que :

- l'orientation est horizontale, le prédicteur local PL2 est sélectionné,
- l'orientation est verticale, le prédicteur local PL3 est sélectionné,
- l'orientation est diagonale, le prédicteur local PL4 est sélectionné,
- si aucune orientation ne se dégage, le prédicteur local PL1 est sélectionné.

Un élément de syntaxe est codé dans le flux de données STR pour indiquer au décodeur quel prédicteur local a été utilisé pour prédire le bloc courant.

Selon un mode particulier de réalisation de l'invention, au cours d'une étape E221, un pas de quantification $\delta_2$ est déterminé. Selon le mode particulier de réalisation décrit ici, le pas de quantification $\delta_2$ dépend d'un même paramètre de quantification que le pas de quantification $\delta_1$ qui serait déterminé à l'étape E210 si le bloc courant était codé selon le premier mode de codage.

Selon une variante, le pas de quantification $\delta_2$ peut être déterminé en fonction du pas de quantification $\delta_1$. Par exemple, une fonction linéaire ou polynomiale peut être utilisée, telle que $\delta_2 = a_1 * \delta_1. + b_1$, où $a_1$ et $b_1$ sont des entiers ou nombres réels prédéterminés, ou encore $\delta_2 = c_1 * \delta_1^2 + d_1 * \delta_1 + e_1$ ou $c_1$, $d_1$, et $e_1$ sont des entiers ou nombres réels prédéterminés. Par exemple, $a_1=2$, $b_1=10$, $c_1=0.1$, $d_1=2$ et $e_1=10$. D'autres valeurs sont possibles.

Selon une autre variante, le pas de quantification $\delta_2$ peut être déterminé à partir du paramètre $\lambda$ fixant le compromis entre compression et qualité. Ce paramètre lagrangien $\lambda$ peut être entré par l'utilisateur ou défini par le codeur, de manière similaire à $\delta_1$ ou déterminé à partir du paramètre de quantification QP précédemment évoqué.

Selon une autre variante, le pas de quantification $\delta_2$ peut être fixé directement par l'utilisateur, et c'est alors le pas de quantification $\delta_1$ qui est fonction de $\delta_2$.

Lors d'une étape E222, un résidu de prédiction R1 est calculé pour le bloc courant. Pour cela, une fois le prédicteur local choisi, pour chaque pixel courant du bloc courant :

- le pixel courant X du bloc courant est prédit par le prédicteur local PL sélectionné, à l'aide soit des pixels extérieurs au bloc et déjà reconstruits (et donc disponibles avec leur valeur décodée), soit de pixels précédemment reconstruits dans le bloc courant, soit des deux, afin d'obtenir une valeur prédite PRED. Dans tous les cas, le prédicteur PL utilise des pixels précédemment reconstruits. Sur la figure 3, on voit que les pixels du bloc courant situés sur la première ligne et/ou la première colonne du bloc courant utiliseront comme pixels de référence (pour construire la valeur prédite PRED) des pixels extérieurs au bloc et déjà reconstruits (pixels en gris sur la figure 3) et éventuellement des pixels déjà reconstruits du bloc courant. Pour les autres pixels du bloc courant, les pixels de référence utilisés pour construire la valeur prédite PRED sont situés à l'intérieur du bloc courant.

- la différence DIFF entre PRED et X est quantifiée en une valeur Q(X), par un quantificateur scalaire de pas de quantification $\delta_2$, par Q(X) = ScalarQuant(DIFF) = ScalarQuant($\delta_2$, X-PRED), le quantificateur scalaire étant par exemple un quantificateur scalaire au plus proche voisin tel que:

$$ScalarQuant(\Delta, x) = floor\left(\frac{x+\frac{\Delta}{2}}{\Delta}\right)$$

.

Q(X) est le résidu quantifié associé à X. Il est calculé dans le domaine spatial, i.e. calculé directement à partir de la différence entre la valeur prédite PRED du pixel X et la valeur originale de X. Un tel résidu quantifié Q(X) pour le pixel X est mémorisé dans un bloc de résidu de prédiction quantifié R1$_Q$, qui sera codé ultérieurement.

- la valeur prédite décodée P1(X) de X est calculée en ajoutant à la valeur prédite PRED la valeur déquantifiée du résidu quantifié Q(X). La valeur prédite décodée P1(X) de X est ainsi obtenue par P1(X) = PRED + ScalarDequant($\delta_2$, Q(X)). Par exemple, la fonction inverse de quantification scalaire au plus proche est donnée par: ScalarDequant($\Delta$, x) = $\Delta \times x$.

La valeur prédite décodée P1(X) permet ainsi de prédire d'éventuels pixels qui restent à traiter dans le bloc courant. Par ailleurs, le bloc P1 comprenant les valeurs décodées/reconstruites des pixels du bloc courant constitue le prédicteur ILR du bloc courant (par opposition au prédicteur intra classique).

Les sous-étapes décrites ci-dessus sont effectuées pour tous les pixels du bloc courant, dans un ordre de parcours qui assure que les pixels utilisés pour la prédiction choisie parmi PL1,... , PL4 soient disponibles.

Selon une variante de réalisation, l'ordre de parcours du bloc courant est l'ordre lexicographique, i.e. de gauche à droite, et de haut en bas.

Selon une autre variante de réalisation, plusieurs ordres de parcours du bloc courant peuvent être utilisés, par exemple :

- l'ordre lexicographique, ou
- en parcourant la première colonne de haut en bas, puis la colonne juste à sa droite, etc . ou bien,
- en parcourant les diagonales les unes après les autres.

Selon cette autre variante, il est possible de simuler le coût de codage associé à chacun des ordres de parcours et de choisir le meilleur ordre de parcours du bloc courant au sens débit/distorsion, puis de coder pour le bloc courant une information représentative de l'ordre de parcours choisi.

A l'issu de l'étape E222, le bloc de résidu quantifié R1$_Q$ a été déterminé. Ce bloc de résidu quantifié R1$_Q$ doit être codé pour être transmis au décodeur. Le prédicteur P1 du bloc courant a également été déterminé.

Lors d'une étape E223, le bloc de résidu quantifié R1$_Q$ est codé afin de le transmettre au décodeur. Il est possible d'utiliser toute approche connue telle que la méthode décrite dans HEVC pour coder les coefficients quantifiés d'un résidu de prédiction classique. Par exemple selon une variante de réalisation, les valeurs du bloc de résidu quantifié R1$_Q$ sont codées à l'aide d'un codeur entropique dans le flux de données STR.

Selon un mode particulier de réalisation de l'invention, il est possible de déterminer et coder un résidu de prédiction additionnel R2 à partir du prédicteur ILR obtenu pour le bloc courant. Le codage d'un résidu de prédiction additionnel R2 est toutefois optionnel. Il est possible en effet de simplement coder le bloc courant par sa version prédite P1 et le résidu quantifié R1$_Q$. Afin de coder un résidu de prédiction additionnel R2 pour le bloc courant, les étapes suivantes sont mises en oeuvre.

Lors d'une étape E224, la différence R2 entre le prédicteur P1 et le bloc courant original X$_b$ est calculée afin de constituer un résidu additionnel R2 : R2= X$_b$-P1. Les étapes suivantes correspondent aux étapes classiques de codage de ce résidu R2.

Lors d'une étape E225, le résidu R2 est transformé à l'aide d'une transformée fréquentielle de façon à produire le bloc de coefficients R2$_T$.

La transformée peut être une transformée de type DCT par exemple. Il est possible de choisir la transformée à utiliser dans un ensemble prédéterminé de transformées E$_{T2}$ et de signaler la transformée utilisée au décodeur. Dans ce cas, l'ensemble E$_{T2}$ peut être différent de l'ensemble E$_T$, afin de s'adapter aux statistiques particulières du résidu R2.

Lors d'une étape E226, le bloc de coefficients R2$_T$ est quantifié, par exemple à l'aide d'une quantification scalaire de pas de quantification $\delta$. Ceci produit le bloc R2$_{TQ}$.

Le pas de quantification $\delta$ peut être fixé par l'utilisateur. Il peut également être calculé à l'aide d'un autre paramètre $\hat{A}$ fixant le compromis entre compression et qualité et entré par l'utilisateur ou le codeur. Par exemple, le pas de quantification $\delta$ peut correspondre au pas de quantification $\delta_1$ ou être déterminé de manière similaire à celui-ci.

Lors d'une étape E227, les coefficients du bloc quantifié R2$_{TQ}$ sont alors transmis de façon codée. On peut par exemple utiliser le codage spécifié dans la norme HEVC.

De manière connue, le bloc courant est décodé en dé-quantifiant les coefficients du bloc quantifié R2$_{TQ}$, puis en appliquant la transformée inverse aux coefficients dé-quantifiés pour obtenir le résidu de prédiction décodé. La prédiction P1 est ensuite ajoutée au résidu de prédiction décodé afin de reconstruire le bloc courant et d'obtenir sa version décodée $X_{rec}$. La version décodée $X_{rec}$ du bloc courant peut ensuite être utilisée ultérieurement pour prédire spatialement d'autres blocs voisins de l'image ou bien pour prédire des blocs d'autres images par prédiction inter-images.

Lorsque le bloc courant est codé selon le deuxième mode de codage M2, un mode de prédiction intra classique est déterminé et associé au bloc courant. Pour cela, au cours d'une étape E228, un mode de prédiction intra est déterminé pour le bloc courant dans la liste des modes de prédiction intra disponibles dans le mode de codage intra classique M1.

Plusieurs variantes de réalisation sont possibles.

Selon une variante, la liste des modes de prédiction MPM est créée pour le bloc courant selon le mécanisme décrit plus haut pour le codage selon le premier mode de codage M1. Selon cette variante, le mode de prédiction est déterminé comme le premier mode de la liste MPM. Selon cette variante, seule une sous-partie de la liste MPM peut être créée puisqu'il s'agit de sélectionner le premier élément de la liste MPM.

Selon une autre variante, le mode de prédiction est prédéterminé. Par exemple il peut s'agir d'un mode de prédiction défini par défaut, ou transmis dans le flux de données. Par exemple, le mode de prédiction prédéterminé est le mode PLANAR du standard HEVC.

Selon une autre variante, le mode de prédiction est déterminé comme le mode de prédiction intra qui approxime le mieux le bloc courant décodé $X_{rec}$. Selon cette variante, tous les modes de prédiction ou seulement certains d'entre eux (par exemple ceux compris dans la liste MPM) sont évalués en mesurant une distorsion entre le bloc courant décodé $X_{rec}$ et le bloc prédit obtenu par le mode de prédiction évalué. Le mode de prédiction intra fournissant la plus petite distorsion est sélectionné.

Selon une autre variante, le mode de prédiction est déterminé comme le mode de prédiction intra qui approxime le mieux le bloc courant prédit P1 obtenu par la prédiction ILR. Selon cette variante, tous les modes de prédiction ou seulement certains d'entre eux (par exemple ceux compris dans la liste MPM) sont évalués en mesurant une distorsion entre le bloc courant prédit P1 et le bloc prédit obtenu par le mode de prédiction évalué. Le mode de prédiction intra fournissant la plus petite distorsion est sélectionné.

Selon une autre variante, lorsque pour un bloc codé en ILR, il y a plusieurs prédicteurs locaux possibles, le mode de prédiction intra peut être dépendant du prédicteur local choisi pour prédire le bloc courant. Par exemple, une table d'association connue du codeur et du décodeur indique quel mode de prédiction intra doit être associé au bloc courant en fonction du prédicteur local choisi.

Lors d'une étape E229, le mode de prédiction intra déterminé est associé au bloc courant. Il s'agit bien ici d'associer un mode de prédiction intra mais non de le transmettre au décodeur. La méthode qui détermine le mode intra à associer au bloc courant est reproductible au décodeur et ne nécessite la transmission d'aucune information.

Plusieurs variantes de réalisation ont été décrites ci-dessus, mais le codeur et le décodeur doivent bien entendu mettre en oeuvre la même variante.

Le mode de prédiction intra associé au bloc courant pourra ensuite servir à:

- prédire le mode de prédiction intra d'un bloc suivant qui serait codé en mode intra classique, ou
- déterminer, le cas échéant, le mode de prédiction intra à associer à un bloc suivant qui serait codé selon un autre mode de codage distinct du mode de prédiction intra classique. Cet autre mode de codage pourrait être un mode de codage ILR, ou autre (inter, etc ...).

Lors d'une étape E23, il est vérifié si le bloc courant est le dernier bloc de l'image à traiter par le procédé de codage, compte tenu de l'ordre de parcours défini précédemment. Si oui, le procédé passe au codage (étape E25) de l'image suivante de la vidéo le cas échéant. Si non, lors d'une étape E24, le bloc suivant de l'image à traiter est sélectionné selon le parcours de l'image défini précédemment et le procédé de codage passe à l'étape E2, où le bloc sélectionné devient le bloc courant à traiter.

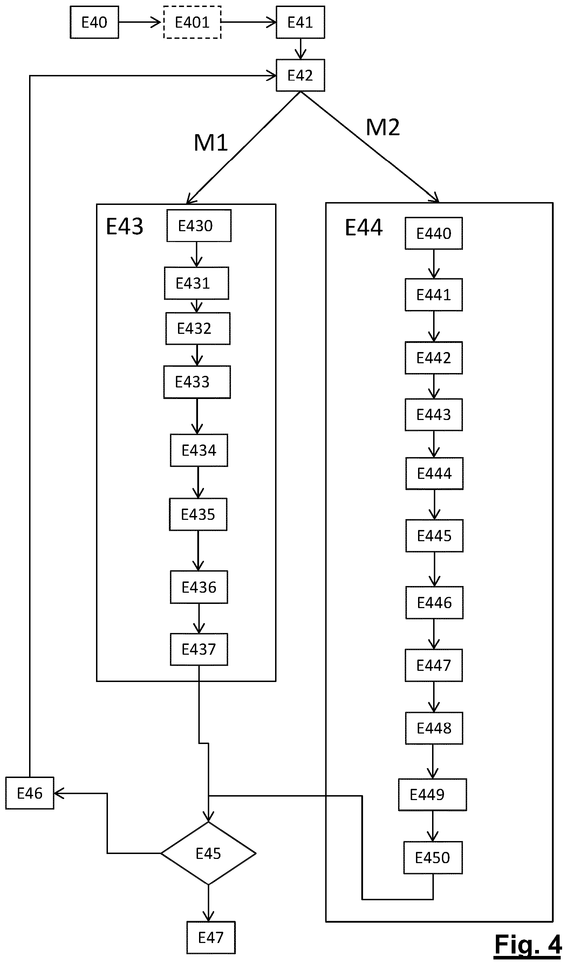

La figure 4 présente des étapes du procédé de décodage d'un flux STR de données codées représentatif d'une séquence d'images $I_1$, $I_2$, ..., ..., $I_{Nb}$ à décoder selon un mode particulier de réalisation de l'invention.

Par exemple, le flux de données STR a été généré via le procédé de codage présenté en relation avec la figure 1. Le flux de données STR est fourni en entrée d'un dispositif de décodage DEC, tel que décrit en relation avec la figure 7.

Le procédé de décodage procède au décodage du flux image par image et chaque image est décodée bloc par bloc.

Lors d'une étape E40, une image $I_j$ à décoder est subdivisée en blocs. Chaque bloc va subir une opération de décodage consistant en une suite d'étapes qui sont détaillées par la suite. Les blocs peuvent être de même taille ou de tailles différentes.

Lors d'une étape optionnelle E401, selon un mode particulier de réalisation de l'invention, un paramètre de quantification QP est lu à partir du flux de données STR.

Lors d'une étape E41, un premier bloc ou sous-bloc $X_b$ à décoder de l'image $I_j$ est sélectionné comme bloc courant selon un sens de parcours de l'image $I_j$ qui est prédéterminé. Par exemple, il peut s'agir du premier bloc dans l'ordre lexicographique de parcours de l'image. Lors d'une étape E42, une information indiquant un mode codage pour le bloc courant est lue à partir du flux de données STR. Selon le mode particulier de réalisation décrit ici, cette information indique si le bloc courant est codé selon un premier mode de codage M1 ou selon un deuxième mode de codage M2. Selon le mode particulier de réalisation décrit ici, le premier mode de codage M1 correspond au codage du bloc courant par prédiction intra classique, par exemple tel que défini selon le standard HEVC, et le deuxième mode de codage M2 correspond au codage par prédiction In Loop Residual (ILR).

Dans d'autres modes particuliers de réalisation, l'information lue à partir du flux STR peut également indiquer l'utilisation d'autres modes de codage pour coder le bloc courant (non décrits ici).

On décrit ci-après l'étape E43 de décodage du bloc courant lorsque le bloc courant est codé selon le premier mode de codage M1.

Lors d'une étape E430, un pas de quantification $\delta_1$ est déterminé. Par exemple, le pas de quantification $\delta_1$ est déterminé à partir du paramètre de quantification QP lu lors de l'étape E401 ou de manière similaire à ce qui a été fait au codeur. Par exemple, le pas de quantification $\delta_1$ peut être calculé à l'aide du paramètre de quantification QP lu lors de l'étape E401. Par exemple, le paramètre de quantification QP peut être le paramètre de quantification utilisé classiquement dans les normes AVC ou HEVC. Ainsi, dans la norme HEVC, le pas de quantification $\delta_1$ est déterminé par l'équation $\delta_1 = levelScale[\ QP\%6\ ] << (QP/6))$ où $levelScale[\ k\ ] = \{\ 40, 45, 51, 57, 64, 72\ \}$ pour $k = 0..5$.

Lors d'une étape E431, le mode de prédiction utilisé pour coder le bloc courant est décodé à partir des blocs voisins. Pour cela, comme ce qui a été fait au codeur, le mode de prédiction intra choisi pour le bloc courant est décodé, en utilisant les modes de prédiction intra associés aux blocs voisins du bloc courant.

Selon une variante du mode particulier de réalisation de l'invention décrit ici, le mode de prédiction intra associé à un bloc est :

- le mode de prédiction intra qui a été utilisé pour prédire le bloc si le bloc a été codé par un mode de codage par prédiction intra classique,
- le mode de prédiction intra qui a été associé au bloc si le bloc a été codé par un mode de codage distinct d'une prédiction intra classique. Un exemple d'une telle association est décrit plus loin en référence aux étapes E449 et E450.

La construction des deux listes MPM et non-MPM est strictement similaire à ce qui a été fait lors du codage. Selon le standard HEVC, des éléments de syntaxe du type suivant sont décodés :

- un indicateur binaire indiquant si le mode de prédiction à coder pour le bloc courant est dans la liste MPM ou non,
- si le mode de prédiction du bloc courant appartient à la liste MPM, un index dans la liste MPM correspondant au mode de prédiction du bloc courant est codé,

- si le mode de prédiction du bloc courant n'appartient pas à la liste MPM, un index dans la liste non-MPM correspondant au mode de prédiction du bloc courant est codé.

L'indicateur binaire et l'index du mode de prédiction sont donc lus pour le bloc courant à partir du flux de données STR, pour décoder le mode de prédiction intra du bloc courant.

Lors d'une étape E432, le décodeur construit un bloc prédit P pour le bloc courant à partir du mode de prédiction décodé.

Lors d'une étape E433, le décodeur décode les coefficients du bloc quantifié $R_{TQ}$ à partir du flux de données STR, par exemple en utilisant le décodage spécifié dans la norme HEVC. Lors d'une étape E434, le bloc décodé $R_{TQ}$ est dé-quantifié, par exemple à l'aide d'une dé-quantification scalaire de pas de quantification $\delta_1$. Ceci produit le bloc de coefficients dé-quantifiés $R_{TQD}$.

Lors d'une étape E435, une transformée fréquentielle inverse est appliquée au bloc de coefficients dé-quantifiés $R_{TQD}$ de façon à produire le bloc de résidu de prédiction décodé $R_{TQDI}$. La transformée pourra être une transformée de type DCT inverse par exemple. Il est possible de choisir la transformée à utiliser dans un ensemble prédéterminé de transformées $E_{TI}$ en décodant un indicateur à partir du flux de données STR.

Lors d'une étape E436, le bloc courant est reconstruit à partir du bloc prédit P obtenu à l'étape E432 et le bloc de résidu décodé $R_{TQDI}$ obtenu à l'étape E435, afin de produire le bloc courant décodé $X_{rec}$, par $X_{rec} = P + R_{TQDI}$.

Lors d'une étape E437, le mode de prédiction intra décodé à l'étape E431 est associé au bloc courant.

On décrit ci-après l'étape E44 de décodage du bloc courant lorsque le bloc courant est codé selon le deuxième mode de codage M2.

Lors d'une étape E440, le prédicteur local PL utilisé pour prédire les pixels du bloc courant est déterminé. Dans le cas où un seul prédicteur est disponible, le prédicteur local est par exemple défini par défaut au niveau du décodeur et aucun élément de syntaxe n'a besoin d'être lu dans le flux STR pour le déterminer.

Dans le cas où plusieurs prédicteurs locaux sont disponibles, par exemple les prédicteurs PL1-PL4 décrits plus haut, un élément de syntaxe est décodé du flux de données STR pour identifier quel prédicteur local a été utilisé pour prédire le bloc courant. Le prédicteur local est donc déterminé à partir de cet élément de syntaxe décodé.

Lors d'une étape E441, le pas de quantification $\delta_2$ est déterminé, de manière similaire à ce qui a été fait au codeur.

Lors d'une étape E442, le résidu quantifié $R1_Q$ est décodé à partir du flux de données STR. Il est possible d'utiliser toute approche connue telle que la méthode décrite dans HEVC pour décoder les coefficients quantifiés du résidu de prédiction classique.

Lors d'une étape E443, le bloc résidu quantifié $R1_Q$ est dé-quantifié à l'aide du pas de quantification $\delta_2$, de façon à produire le bloc de résidu dé-quantifié $R1_{QD}$.

Lors d'une étape E444, lorsque le bloc de résidu dé-quantifié $R1_{QD}$ est obtenu, le bloc prédit P1 est construit à l'aide du prédicteur local PL déterminé lors de l'étape E440.

Au cours de l'étape E444, chaque pixel du bloc courant est prédit et reconstruit de la manière suivante:

- le pixel courant X du bloc courant est prédit par le prédicteur PL sélectionné, à l'aide soit des pixels extérieurs au bloc et déjà décodés, soit de pixels précédemment reconstruits du bloc courant, soit des deux, afin d'obtenir une valeur prédite PRED. Dans tous les cas, le prédicteur PL utilise des pixels précédemment décodés ;
- la valeur prédite décodée P1(X) du pixel courant X est calculée en ajoutant à la valeur prédite PRED, la valeur dé-quantifiée du résidu de prédiction $R1_{QD}$, tel que $P1(X) = PRED + R1_{QD}(X)$.

Ces étapes sont mises en oeuvre pour tous les pixels du bloc courant, dans un ordre de parcours qui assure que les pixels utilisés pour la prédiction choisie parmi PL1,... ,PL4 soient disponibles.

Par exemple, l'ordre de parcours est l'ordre lexicographique (de gauche à droite, puis les lignes de haut en bas).

Selon un mode particulier de réalisation de l'invention, le bloc prédit P1 comprenant les valeurs prédites décodées P1(X) de chaque pixel du bloc courant constitue ici le bloc courant décodé $X_{rec}$.

Selon un autre mode particulier de réalisation de l'invention, on considère ici qu'un résidu de prédiction additionnel a été codé pour le bloc courant. Il est donc nécessaire de décoder ce résidu de prédiction additionnel afin de reconstruire la version décodée du bloc courant $X_{rec}$. Par exemple, cet autre mode particulier de réalisation peut être activé ou non par défaut au niveau du codeur et du décodeur. Ou bien, un indicateur peut être codé dans le flux de données avec les informations de niveau bloc pour indiquer pour chaque bloc codé selon le mode de codage ILR si un résidu de prédiction additionnel est codé. Ou bien encore un indicateur peut être codé dans le flux de données avec les informations de niveau image ou séquence d'images pour indiquer pour tous les blocs de l'image ou de la séquence d'images codés selon le mode de codage ILR si un résidu de prédiction additionnel est codé.

Lorsqu'un résidu de prédiction additionnel est codé pour le bloc courant, lors d'une étape E445, les coefficients du résidu de prédiction quantifié $R2_{TQ}$ sont décodés du flux de données STR, à l'aide de moyens adaptés à ceux mis en oeuvre au codeur, par exemple les moyens mis en oeuvre dans un décodeur HEVC.

Lors d'une étape E446, le bloc de coefficients quantifiés $R2_{TQ}$ est dé-quantifié, par exemple à l'aide d'une dé-quantification scalaire de pas de quantification $\delta_1$. Ceci produit le bloc de coefficients dé-quantifiés $R2_{TQD}$.

Lors d'une étape E447, une transformée fréquentielle inverse est appliquée au bloc $R2_{TQD}$ de façon à produire le bloc de résidu de prédiction décodé $R2_{TQDI}$.

La transformée inverse pourra être une transformée de type DCT inverse par exemple.

Il est possible de choisir la transformée à utiliser dans un ensemble prédéterminé de transformées $E_{T2}$ et de décoder l'information signalant la transformée à utiliser au décodeur. Dans ce cas, l'ensemble $E_{T2}$ est différent de l'ensemble $E_T$, afin de s'adapter aux statistiques particulières du résidu R2.

Lors d'une étape E448, le bloc courant est reconstruit en ajoutant le bloc prédit P1 obtenu lors de l'étape E444 au résidu de prédiction décodé $R2_{TQDI}$.

Lorsque le bloc courant est décodé, un mode de prédiction intra classique est déterminé et associé au bloc courant. Pour cela, au cours d'une étape E449, un mode de prédiction intra est déterminé pour le bloc courant dans la liste des modes de prédiction intra disponibles dans le mode de codage intra classique. Cette détermination est mise en oeuvre de manière similaire à ce qui a été mis en oeuvre au niveau du codeur.

Lors d'une étape E450, le mode de prédiction intra déterminé est associé au bloc courant.

Lors d'une étape E45, il est vérifié si le bloc courant est le dernier bloc de l'image à traiter par le procédé de décodage, compte tenu de l'ordre de parcours défini précédemment. Si oui, le procédé passe au décodage (étape E47) de l'image suivante de la vidéo le cas échéant. Si non, lors d'une étape E46, le bloc suivant de l'image à traiter est sélectionné selon le parcours de l'image défini précédemment et le procédé de décodage passe à l'étape E42, le bloc sélectionné devenant le bloc courant à traiter.

La figure 5 illustre un exemple de signal STR comportant des données codées représentatives d'au moins un bloc d'une image selon un mode particulier de réalisation de l'invention. Par exemple, le signal STR peut comprendre un paramètre de quantification QP permettant de déterminer le pas de quantification $\delta_1$ et le pas de quantification $\delta_2$ décrits plus haut. Ce paramètre de quantification QP peut être codé au niveau du bloc, ou au niveau image ou séquence d'images dans le cas du codage d'une vidéo.

Le signal STR comprend un indicateur codé TY indiquant pour un bloc d'une image, un mode de codage pour ce bloc. Lorsque l'indicateur TY indique que le bloc est codé selon le deuxième mode de codage, ici le mode ILR, le signal comprend alors des valeurs codées de résidus de prédiction quantifiés $R1_Q$ et éventuellement des valeurs codées de résidus de prédiction transformés quantifiés $R2_{TQ}$. Lorsque plusieurs prédicteurs locaux sont possibles pour le bloc courant, le signal comprend également un indicateur codé de prédicteur local PL.

Lorsque l'indicateur TY indique que le bloc est codé selon le premier mode de codage, ici le mode de prédiction intra classique, le signal comprend alors des valeurs codées de résidus de prédiction transformés quantifiés $R_{TQ}$, un indicateur binaire $i_{MPM}$ indiquant si le mode de prédiction à coder pour le bloc courant est dans la liste MPM ou non, et un index $idx_{MPM}$ indiquant l'index du mode de prédiction du bloc courant dans la liste correspondante.

La figure 6 présente la structure simplifiée d'un dispositif de codage COD adapté pour mettre en oeuvre le procédé de codage selon l'un quelconque des modes particuliers de réalisation de l'invention.

Selon un mode particulier de réalisation de l'invention, les étapes du procédé de codage sont mises en oeuvre par des instructions de programme d'ordinateur. Pour cela, le dispositif de codage COD a l'architecture classique d'un ordinateur et comprend notamment une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en oeuvre les étapes du procédé de codage tel que décrit ci-dessus, lorsque le programme est exécuté par le processeur PROC.

A l'initialisation, les instructions de code du programme d'ordinateur PG sont par exemple chargées dans une mémoire RAM (non représentée) avant d'être exécutées par le processeur PROC. Le processeur PROC de l'unité de traitement UT met notamment en oeuvre les étapes du procédé de codage décrit ci-dessus, selon les instructions du programme d'ordinateur PG.

La figure 7 présente la structure simplifiée d'un dispositif de décodage DEC adapté pour mettre en oeuvre le procédé de décodage selon l'un quelconque des modes particuliers de réalisation de l'invention.

Selon un mode particulier de réalisation de l'invention, le dispositif de décodage DEC a l'architecture classique d'un ordinateur et comprend notamment une mémoire MEM0, une unité de traitement UT0, équipée par exemple d'un processeur PROC0, et pilotée par le programme d'ordinateur PG0 stocké en mémoire MEM0. Le programme d'ordinateur PG0 comprend des instructions pour mettre en oeuvre les étapes du procédé de décodage tel que décrit ci-dessus, lorsque le programme est exécuté par le processeur PROC0.

A l'initialisation, les instructions de code du programme d'ordinateur PG0 sont par exemple chargées dans une mémoire RAM (non représentée) avant d'être exécutées par le processeur PROC0. Le processeur PROC0 de l'unité de traitement UT0 met notamment en oeuvre les étapes du procédé de décodage décrit ci-dessus, selon les instructions du programme d'ordinateur PG0.

## Revendications

**1.** Procédé de décodage d'un flux de données codées représentatif d'au moins une image, ladite image étant découpée en blocs, **caractérisé en ce que** le procédé de décodage comprend les étapes suivantes, pour au moins un bloc de l'image, dit bloc courant:

- détermination (E42) si le bloc courant est codé selon un mode de codage intra ou un autre mode de codage, le mode de codage intra étant un mode de codage utilisant un mode de prédiction intra sélectionné dans un groupe de modes de prédiction intra, en fonction d'au moins un mode de prédiction intra associé à un bloc voisin du bloc courant, l'autre mode de codage étant un mode de codage dans lequel la prédiction du bloc courant est obtenue en codant le bloc pixel par pixel en fonction d'une fonction de prédiction locale utilisant des pixels précédemment reconstruits, voisins du pixel courant
- lorsque le bloc courant est codé selon ledit mode de codage intra:

  - détermination (E431), pour le bloc courant, d'un mode de prédiction intra dans ledit groupe de modes de prédiction intra, en fonction d'au moins un mode de prédiction intra associé à un bloc précédemment décodé de l'image,
  - décodage (E43) dudit bloc courant en fonction dudit mode de prédiction intra déterminé,
  - association (E437) audit bloc courant dudit mode de prédiction intra déterminé,

- lorsque le bloc courant est codé selon ledit autre mode de codage:

  - décodage (E44) dudit bloc courant selon ledit autre mode de codage,
  - détermination (E449), pour le bloc courant, d'un mode de prédiction intra, dans ledit groupe de modes de prédiction intra,
  - association (E450) audit bloc courant dudit mode de prédiction intra déterminé , et

  lors du décodage d'un bloc suivant le bloc courant :

  - utilisation dudit mode de prédiction intra précédemment associé au bloc courant pour la prédiction d'un mode de prédiction intra du bloc suivant si ledit bloc suivant est codé selon un mode de codage intra.

**2.** Procédé de codage d'un flux de données codées représentatif d'au moins une image, ladite image étant découpée en blocs, **caractérisé en ce que** le procédé de codage comprend les étapes suivantes, pour au moins un bloc de l'image, dit bloc courant:

- détermination (E20) si le bloc courant est codé selon un mode de codage intra ou un autre mode de codage, le mode de codage intra étant un mode de codage utilisant un mode de prédiction intra sélectionné dans un groupe de modes de prédiction intra en fonction d'au moins un mode de prédiction intra associé à un bloc voisin du bloc courant, l'autre mode de codage étant un mode de codage dans lequel la prédiction du bloc courant est obtenue en codant le bloc pixel par pixel en fonction d'une fonction de prédiction locale utilisant des pixels précédemment reconstruits, voisins du pixel courant,
- lorsque le bloc courant est codé selon ledit mode de codage intra:

- détermination (E211), pour le bloc courant, d'un mode de prédiction intra dans un groupe de modes de prédiction intra, en fonction d'au moins un mode de prédiction intra associé à un bloc précédemment décodé de l'image,
- codage (E21) dudit bloc courant en fonction dudit mode de prédiction intra déterminé,
- association (E217) audit bloc courant dudit mode de prédiction intra déterminé,

- lorsque le bloc courant est codé selon ledit autre mode de codage:

- codage (E22) dudit bloc courant selon ledit autre mode de codage,
- détermination (E228), pour le bloc courant, d'un mode de prédiction intra dans ledit groupe de modes de prédiction intra,
- association (E229) audit bloc courant dudit mode de prédiction intra déterminé, et

lors du codage d'un bloc suivant le bloc courant :

- utilisation dudit mode de prédiction intra précédemment associé au bloc courant pour la prédiction d'un mode de prédiction intra du bloc suivant si ledit bloc suivant est codé selon un mode de codage intra.

3. Procédé selon l'une quelconque des revendications 1 ou 2,

- dans lequel la détermination d'un mode de prédiction intra dans un groupe de modes de prédiction intra, en fonction d'au moins un mode de prédiction intra associé à un bloc précédemment décodé de l'image, comprend la construction d'une liste comprenant un sous-ensemble de modes de prédiction intra sélectionnés dans ledit groupe de modes de prédiction intra en fonction dudit au moins un mode de prédiction intra associé à un bloc précédemment décodé de l'image, et
- dans lequel, lorsque le bloc courant est codé selon ledit autre mode de codage, la détermination d'un mode de prédiction intra dans ledit groupe de modes de prédiction intra comprend la construction d'au moins une partie de ladite liste pour le bloc courant, et le mode de prédiction intra déterminé correspond au premier mode de prédiction intra de ladite au moins une partie de ladite liste.

4. Procédé selon l'une quelconque des revendications 1 ou 2, dans lequel lorsque le bloc courant est codé selon ledit autre mode de codage, le mode de prédiction intra déterminé correspond à un mode de prédiction prédéterminé.

5. Procédé selon l'une quelconque des revendications 1 ou 2, dans lequel, lorsque le bloc courant est codé selon ledit autre mode de codage, le mode de prédiction intra déterminé pour le bloc courant correspond à un mode de prédiction intra sélectionné dans au moins un sous-ensemble du groupe de modes de prédiction intra comme fournissant un bloc prédit pour le bloc courant pour lequel une distorsion calculée entre ledit bloc prédit et le bloc courant décodé est minimale.

6. Procédé selon l'une quelconque des revendications 1 ou 2, dans lequel lorsque le bloc courant est codé selon ledit autre mode de codage, le décodage dudit bloc courant comprenant une prédiction dudit bloc courant fournissant un premier bloc courant prédit, le mode de prédiction intra déterminé pour le bloc courant correspond à un mode de prédiction intra sélectionné dans au moins un sous-ensemble du groupe de modes de prédiction intra comme fournissant un deuxième bloc prédit pour le bloc courant pour lequel une distorsion calculée entre ledit deuxième bloc prédit et ledit premier bloc courant prédit est minimale.

7. Procédé selon la revendication 6, dans lequel:

- la prédiction dudit bloc courant fournissant un premier bloc courant prédit comprend, pour chaque pixel du bloc courant, l'obtention d'une prédiction dudit pixel à partir d'un autre pixel précédemment décodé, ledit autre pixel précédemment décodé appartenant audit bloc courant ou à un bloc précédemment décodé de l'image, et

- lorsque ledit autre pixel précédemment décodé appartient audit bloc courant, ledit autre pixel précédemment décodé est obtenu par:

- le décodage d'un résidu de prédiction associé audit autre pixel,
- la reconstruction dudit autre pixel par ajout d'une prédiction dudit autre pixel au résidu décodé.

**8.** Procédé selon l'une quelconque des revendications 1 ou 2, dans lequel:

- lorsque le bloc courant est codé selon ledit autre mode de codage, le décodage dudit bloc courant comprenant:

- la détermination d'une fonction de prédiction locale pour le bloc courant dans un groupe de fonctions de prédiction locale prédéterminées,
- la prédiction dudit bloc courant comprenant, pour chaque pixel du bloc courant:
- l'obtention d'une prédiction dudit pixel selon ladite fonction de prédiction locale utilisant au moins un pixel précédemment décodé voisin dudit pixel, ledit pixel précédemment décodé appartenant audit bloc courant ou à un bloc précédemment décodé de l'image,

- le mode de prédiction intra déterminé pour le bloc courant correspond à un mode de prédiction intra sélectionné dans le groupe de modes de prédiction intra en fonction de la fonction de prédiction locale.

**9.** Procédé selon la revendication 8, dans lequel le mode de prédiction intra pour le bloc courant est déterminé à partir d'une table de correspondance associant un mode de prédiction intra à une fonction de prédiction locale du groupe de fonctions de prédiction locale prédéterminées.

**10.** Procédé selon l'une quelconque des revendications 1 ou 2, dans lequel, pour un bloc voisin du bloc courant, situé après le bloc courant selon un ordre de parcours des blocs de l'image pour le codage ou le décodage, le bloc voisin étant codé selon ledit mode de codage intra, le procédé comprend:

- la détermination, pour le bloc voisin, d'un mode de prédiction intra dans un groupe de modes de prédiction intra, en fonction d'au moins le mode de prédiction intra associé au bloc courant,
- décodage ou codage dudit bloc voisin en fonction dudit mode de prédiction intra déterminé,
- association audit bloc voisin dudit mode de prédiction intra déterminé.

**11.** Procédé selon l'une quelconque des revendications 1 ou 2, dans lequel, pour un bloc voisin du bloc courant, situé après le bloc courant selon un ordre de parcours des blocs de l'image pour le codage ou le décodage, le bloc voisin étant codé selon ledit autre mode de codage, le procédé comprend:

- le décodage ou le codage dudit bloc voisin selon ledit autre mode de codage,
- la détermination, pour le bloc voisin, d'un mode de prédiction intra dans ledit groupe de modes de prédiction intra, en fonction du mode de prédiction intra associé au bloc courant,
- association audit bloc voisin dudit mode de prédiction intra déterminé.

**12.** Dispositif de décodage d'un flux de données codées représentatif d'au moins une image, ladite image étant découpée en blocs, **caractérisé en ce que** le dispositif de décodage comprend un processeur configuré pour, pour au moins un bloc de l'image, dit bloc courant:

- déterminer si le bloc courant est codé selon un mode de codage intra ou un autre mode de codage, le mode de codage intra étant un mode de codage utilisant un mode de prédiction intra sélectionné dans un groupe de modes de prédiction intra en fonction d'au moins un mode de prédiction intra associé à un bloc voisin du bloc courant, l'autre mode de codage étant un mode de codage dans lequel la prédiction du bloc courant est obtenue en codant le bloc pixel par pixel en fonction d'une fonction de prédiction locale utilisant des pixels précédemment reconstruits, voisins du pixel courant,
- lorsque le bloc courant est codé selon ledit mode de codage intra:

- déterminer, pour le bloc courant, un mode de prédiction intra dans un groupe de modes de prédiction intra, en fonction d'au moins un mode de prédiction intra associé à un bloc précédemment décodé de l'image,
- décoder ledit bloc courant en fonction dudit mode de prédiction intra déterminé,
- associer audit bloc courant ledit mode de prédiction intra déterminé,

- lorsque le bloc courant est codé selon ledit autre mode de codage:

- décoder ledit bloc courant selon ledit autre mode de codage,
- déterminer, pour le bloc courant, un mode de prédiction intra dans ledit groupe de modes de prédiction intra,
- associer audit bloc courant ledit mode de prédiction intra déterminé, et

lors du décodage d'un bloc suivant le bloc courant :

- utiliser ledit mode de prédiction intra précédemment associé au bloc courant pour prédire un mode de prédiction intra du bloc suivant si ledit bloc suivant est codé selon un mode de codage intra.

**13.** Dispositif de codage d'un flux de données codées représentatif d'au moins une image, ladite image étant découpée en blocs, **caractérisé en ce que** le dispositif de codage comprend un processeur configuré pour, pour au moins un bloc de l'image, dit bloc courant:

- déterminer si le bloc courant est codé selon un mode de codage intra ou un autre mode de codage, le mode de codage intra étant un mode de codage utilisant un mode de prédiction intra sélectionné dans un groupe de modes de prédiction intra en fonction d'au moins un mode de prédiction intra associé à un bloc voisin du bloc courant, l'autre mode de codage étant un mode de codage dans lequel la prédiction du bloc courant est obtenue en codant le bloc pixel par pixel en fonction d'une fonction de prédiction locale utilisant des pixels précédemment reconstruits, voisins du pixel courant,
- lorsque le bloc courant est codé selon ledit mode de codage intra:

- déterminer, pour le bloc courant, un mode de prédiction intra dans un groupe de modes de prédiction intra, en fonction d'au moins un mode de prédiction intra associé à un bloc précédemment décodé de l'image,
- coder ledit bloc courant en fonction dudit mode de prédiction intra déterminé,
- associer audit bloc courant ledit mode de prédiction intra déterminé,

- lorsque le bloc courant est codé selon ledit autre mode de codage:

- coder ledit bloc courant selon ledit autre mode de codage,
- déterminer, pour le bloc courant, un mode de prédiction intra dans ledit groupe de modes de prédiction intra,
- associer audit bloc courant ledit mode de prédiction intra déterminé, et

lors du codage d'un bloc suivant le bloc courant :

- utiliser ledit mode de prédiction intra précédemment associé au bloc courant pour prédire un mode de prédiction intra du bloc suivant si ledit bloc suivant est codé selon un mode de codage intra.

**14.** Programme d'ordinateur comportant des instructions pour la mise en oeuvre du procédé de décodage selon l'une quelconque des revendications 1 ou 3 à 11 ou du procédé de codage selon l'une quelconque des revendications 2 à 11, lorsque ledit programme est exécuté par un processeur.

**15.** Support d'enregistrement lisible par un ordinateur et comportant des instructions de programme d'ordinateur pour la mise en oeuvre du procédé de décodage selon l'une quelconque des revendications 1 ou 3 à 11 ou du procédé de codage selon l'une quelconque des revendications 2 à 11, lorsque ledit programme est exécuté par un processeur.

**Fig. 1**

STR

| $i_{MP}$ | $idx_{MPM}$ | $R_{TQ}$ |
|---|---|---|

| QP | TY | M PL | $R1_Q$ | $R2_{TQ}$ |
|---|---|---|---|---|

**Fig. 5**

| | $A_b$ |
|---|---|
| $B_b$ | $X_b$ |

**Fig. 2**

$X_b$

|   |   |   |   |   |   |   |   |   |
|---|---|---|---|---|---|---|---|---|
|   |   |   |   |   |   |   |   |   |
|   |   |   |   |   |   |   |   |   |
|   |   |   |   |   |   |   |   |   |
|   |   |   |   | B | C |   |   |   |
|   |   |   |   | A | X |   |   |   |
|   |   |   |   |   |   |   |   |   |
|   |   |   |   |   |   |   |   |   |
|   |   |   |   |   |   |   |   |   |

**Fig. 3**

**Fig. 4**

**Fig. 6**

**Fig. 7**

Europäisches
Patentamt

European
Patent Office

Office européen
des brevets

# RAPPORT DE RECHERCHE EUROPEENNE

**Numéro de la demande**

EP 24 19 0990

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 2 987 966 A1 (ASSISTANCE TECH ET ETUDE DE MATERIELS ELECTRONIQUES [FR]) 13 septembre 2013 (2013-09-13) * le document en entier * ----- | 1-15 | INV. H04N19/176 H04N19/593 H04N19/11 H04N19/463 |
| A | WO 2010/086562 A1 (FRANCE TELECOM [FR]; PATEUX STEPHANE [FR]; CAMMAS NATHALIE [FR]; AMONO) 5 août 2010 (2010-08-05) * page 3, ligne 21 - page 9, ligne 2 * * page 13, ligne 11 - page 16, ligne 12 * * page 20, ligne 8 - page 23, ligne 20 * ----- | 1-15 | H04N19/154 |
| A | WO 2008/093936 A1 (SAMSUNG ELECTRONICS CO LTD [KR]) 7 août 2008 (2008-08-07) * le document en entier * ----- | 1-15 | |

**DOMAINES TECHNIQUES RECHERCHES (IPC)**

H04N

Le présent rapport a été établi pour toutes les revendications

| Lieu de la recherche | Date d'achèvement de la recherche | Examinateur |
|---|---|---|
| Munich | 21 octobre 2024 | Cyranka, Oliver |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 24 19 0990

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-10-2024

| Document brevet cité au rapport de recherche | Date de publication | Membre(s) de la famille de brevet(s) | Date de publication |
|---|---|---|---|
| FR 2987966 A1 | 13-09-2013 | AUCUN | |
| WO 2010086562 A1 | 05-08-2010 | AUCUN | |
| WO 2008093936 A1 | 07-08-2008 | CN 101595735 A | 02-12-2009 |
| | | EP 2119241 A1 | 18-11-2009 |
| | | EP 3399749 A1 | 07-11-2018 |
| | | JP 5506397 B2 | 28-05-2014 |
| | | JP 2010517405 A | 20-05-2010 |
| | | KR 20080070976 A | 01-08-2008 |
| | | US 2008181309 A1 | 31-07-2008 |
| | | WO 2008093936 A1 | 07-08-2008 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MATTHIAS WIEN.** High Efficiency Video Coding, Coding Tools and Spécification. *Signals and Communication Technology,* 2015